# EUROPEAN PATENT SPECIFICATION

(11) **EP 3 135 447 B1**
(45) Date of publication and mention of the grant of the patent: **18.08.2021**
(21) Application number: 15183134.4
(22) Date of filing: 31.08.2015
(51) Int. Cl.: B27B 17/14

(54) **CHAINSAW AND METHOD FOR TENSIONING A CHAIN THEREOF**
KETTENSÄGE SOWIE VERFAHREN ZUM SPANNEN EINER KETTE DAFÜR
SCIE À CHAÎNE ET PROCÉDÉ ASSOCIÉ DE MISE SOUS TENSION D'UNE CHAÎNE

(43) Date of publication of application: 01.03.2017
(73) Proprietor: Robert Bosch GmbH, 70442 Stuttgart (DE)
(72) Inventor: Poole, Richard, GB-IP32 LR Suffolk (GB)

(56) References cited:
- US-B1- 6 286 905

## Description

### TECHNICAL FIELD

The present disclosure relates to a chainsaw provided with means for the tensioning of a chain thereof. The chainsaw is further provided with a support frame, a guide bar for guiding the chain and with a motor assembly comprising a motor and a chain driving sprocket that engages the chain for driving it around the guide bar during operation of the chainsaw.

### BACKGROUND ART

In order for the chainsaw to function properly, the chain thereof must be tensioned around the chain driving sprocket and the guide bar. However, during use, chain tension may gradually reduce due to the normal wear and tear thereof. Furthermore, chain tension must be completely removable in order to dismount the chain from the chainsaw and to replace it with a new or reconditioned chain, for example when the chain is worn-out.

For this latter purpose, both DE 10 2004 022 170 A1 and US 8,220,166 B2 teach to displaceably attach the guide bar to the support frame such that it can be moved towards or away from the chain driving sprocket that itself is mounted on the support frame at a fixed position. By moving the guide bar away from the chain driving sprocket, tension is applied to the chain and vice versa. In these known embodiments of the chainsaw, the guide bar can obviously also be firmly locked into a fixed position relative to the chain driving sprocket to maintain the chain tension when sawing. These known chain tensioning mechanisms thus allow the chainsaw operator to increase, decrease or completely remove the chain tension.

Alternatively, as exemplified by DE 41 37 409 A1 and US2014/0106915, it is known to displaceably mount the chain driving sprocket on the support frame such that it can be moved towards or away from the guide bar that itself is immovably fixed to the support frame. As before, chain driving sprocket can also be firmly locked into a fixed position relative to the guide bar to maintain the chain tension during use of the chainsaw.

More in particular, both DE 41 37 409 A1 and US 2014/0106915 A1 utilise the feature that the chain driving sprocket of the known chainsaw is driven by the motor via an intermediate gear wheel. The presence of the intermediate gear between a drive shaft and a drive gear of the motor, on the one hand, and the chain driving sprocket, on the other hand, allows the chain driving sprocket to roll along a part of an inner or an outer circumference of such intermediate gear while remaining in driving, i.e. meshing, relationship therewith. By such rolling movement relative to the intermediate gear, the chain driving sprocket is also displaced relative to the support frame, either more towards or away from the guide bar fixed to the support frame, thereby respectively releasing or tensioning the chain.

Futhermore US 6,286,905 B1 provides a version of a chain tensioning adjusting means by using a tension hydraulic cylinder.

US 6,286,905 B1 discloses a chainsaw as per the preamble of claim 1 and a method as per the preamble of claim 12.

A limitation of these known chain tensioning mechanisms is the relatively complex design thereof. For example, the said rolling movement of the chain driving sprocket needs to be accurately defined to maintain the correct meshing relationship there between.

### SUMMARY OF THE INVENTION

It is an object of the present disclosure to provide for a chainsaw with tensioning means of relatively simple design and/or operation, as well as to provide a method for tensioning the chain of the chainsaw. According to the present disclosure this object is realised by a chainsaw comprising the combination of features of claim 1 and a method comprising the combination of features of claim 12.

In the chainsaw according to the present disclosure, the guide bar can in principle be permanently fixed to the support frame, whereby a favourably rigid connection between these components can be realised easily, at least compared to the known guide bar and support frame that are mutually displaceable.

According to the present disclosure, once the chain tension is adjusted to the required level by the displacement of the motor assembly, such tension can be maintained by locking the motor assembly to the support frame by means of a lock-and-release mechanism. Such a lock-and-release mechanism can take many forms, such as a simple butterfly nut that is threaded on a protruding stub of the motor assembly with a part of the support frame being provided in-between and clampable by the butterfly nut and the motor assembly. Furthermore, the lock-and-release mechanism can favourably comprise an over-centre cam, which mechanism is generally uncomplicated to operate manually. Also for this purpose, a ratchet can be advantageously applied.

In an embodiment of the chainsaw according to the present disclosure, a spring is provided between the motor assembly and the support frame, exerting a force on the motor assembly directed away from the guide bar. The force exerted on the support frame by the spring counteracts, at least in part, a force exerted on the support frame by the tensioned chain, such that the lock-and-release mechanism is favourably loaded to a lesser extent than without such spring.

According to the present invention, the motor assembly is pivotally mounted on the support frame. This particular arrangement has the advantage over a linear, e.g. sliding displacement of the motor assembly that the pivot point between the motor assembly and the support frame can remain in a fixed position relative to the housing and can thus be securely fixed thereto relatively simply. This pivot point can be arranged such that a virtual line intersecting the pivot point and an axis of rotation of the chain driving sprocket is oriented perpendicular to the long direction of the oblong guide bar, at least in one possible position of the motor assembly relative to the support frame. Hereby, a displacement of the motor assembly relative to the guide bar occurs mainly in a long direction of the latter. Furthermore, the pivotal mounting of the motor assembly relative to the support frame has the advantage that a lever action, i.e. force amplification action, can be included therein relatively easily, which lever action facilitates the manual tensioning of the chain. For example, the motor assembly can be provided with a handle that is located further away from the pivot point, as compared to a distance between the axis of rotation of the chain driving sprocket and the pivot point. However, it remains possible in principle to instead locate the pivot point in between the handle and the axis of rotation of the chain driving sprocket, or even to locate the handle in between the pivot point and the axis of rotation of the chain driving sprocket.

In an embodiment of the chainsaw according to the present disclosure, when the long direction of the guide bar is aligned essentially horizontally, the pivot point of the motor assembly is arranged in horizontal direction in-between the far end of the guide bar and the centre of gravity of the motor assembly.

In this case, the manual tensioning of the chain is facilitated by the weight of the motor assembly that tends to rotate the motor assembly on its pivot point away from the guide bar.

In an embodiment of the chainsaw according to the present disclosure, the support frame represents, or at least is part of, a housing of the chainsaw that is provided with one or more handgrips for the manipulation and/or the operation of the chainsaw. In this case, the said manual tensioning can be facilitated by arranging the pivot point between the motor assembly and the support frame on a side of housing opposite a side thereof that is provided with at least one of the handgrips.

Preferred embodiments of the chainsaw according to claim 1 are disclosed in dependent claims 2 to 11. A preferred embodiment of the method according to claim 12 is disclosed in dependent claim 13.

### BRIEF DESCRIPTION OF THE DRAWINGS

In the following, the chainsaw according to the present disclosure will be explained along one or more exemplary embodiments thereof and with reference to the attached drawings, whereof:
Figure 1 is a perspective view of a chainsaw according to the present disclosure;
Figure 2 is a cross-section of the chainsaw of figure 1, illustrating a pivoting arrangement of a motor assembly of the chainsaw;
Figure 3 provides a further cutaway view of the chainsaw of figure 1, illustrating the motor assembly in two different positions relative to a housing of the chainsaw;
Figure 4 is a cross-section of the chainsaw of figure 1, illustrating a lock-and-release mechanism thereof for locking the position of the motor assembly relative to the housing of the chain saw.
Figure 5 schematically illustrates a second possible embodiment of lock-and-release mechanism suitable for the chainsaw according to the present disclosure; and
Figure 6 schematically illustrates a third possible embodiment of lock-and-release mechanism suitable for the chainsaw according to the present disclosure.

### DETAILED DESCRIPTION

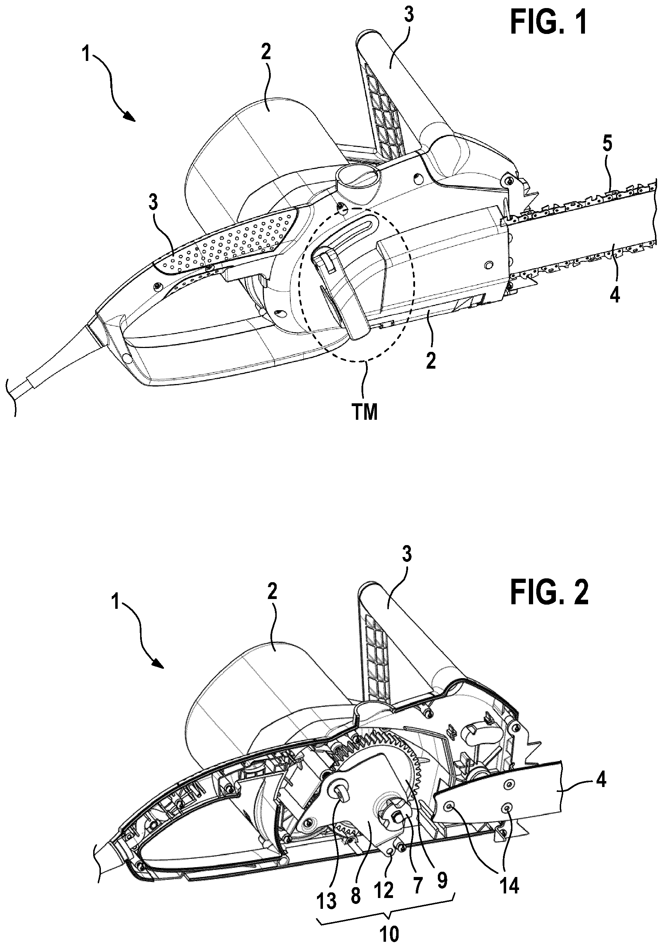

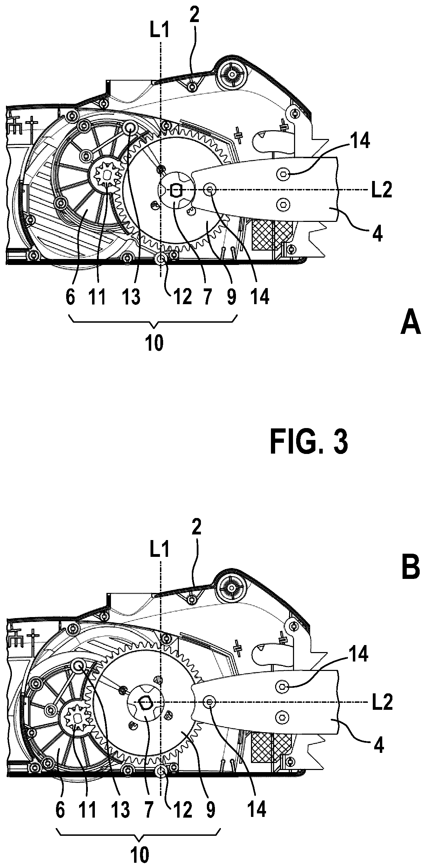

In figure 1 a chainsaw 1 is shown in an external, perspective view. The chainsaw 1 is, as such, generally known and is provided with a housing 2, with one or more handgrips 3, for allowing manual operation of the chainsaw 1, with an oblong guide bar 4 and with a chain 5 arranged on and around the guide bar 4. The housing 2 also contains an electric motor 6 (see figure 3) for driving the chain 5 via a chain driving sprocket 7 (see figure 2) during use of the chainsaw 1. The electric motor can by supplied with energy from the grid, form a battery or another energy source. The chainsaw can also be a petrol driven chainsaw, or supplied with pneumatic or hydraulic energy or the like.

The chain 5 of the chainsaw 1 is tensioned, i.e. is wrapped relatively tightly around the chain driving sprocket 7 and the guide bar 4 to achieve the optimum cutting action, as well as the highest operation comfort and safety. However, during continued use of the chainsaw 1, the chain 5 thereof will slightly lengthen, whereby the said chain tension disadvantageously decreases. However, by means of the chain (re-)tensioning mechanism TM in accordance with the present disclosure, the chain tension can be favourably increased manually to compensate for such lengthening, i.e. slackening of the chain 5 and/or be applied or adjusted after a replacement of the chain i.e. due to wear or the like. In figures 2 and 3, the chain tensioning mechanism TM is illustrated in detail in cross-sections of the housing 2.

Figure 2 provides a cross-sectional view of the chainsaw 1 of figure 1, showing several internal component parts thereof in addition to the guide bar 4. In particular, it is shown in figure 2 that the chain driving sprocket 7 is mounted on a base plate 8 coaxially with an intermediate gear 9. Together, these component parts of chain driving sprocket 7, intermediate gear 9 and base plate 8 are referred to as the motor assembly 10 of the chainsaw 1, which motor assembly 10 further comprises an electric motor 6 provided with a drive gear 11 that meshes with the intermediate gear 9 (see figure 3).

The housing 2 of the chainsaw 1 doubles as a support frame 2, to which both the motor assembly 10 and the guide bar 4 are attached. In accordance with the present disclosure, the motor assembly 10 is displaceably mounted on the housing 2 by means of a pivot 12 that rotatably connects the base plate 8 to the housing 2. By pivoting the whole of the motor assembly 10 relative to the housing 2, in particular the chain driving sprocket 7 thereof can be (re-)positioned relative to the guide bar 4. The motor assembly 10 is provided with a handle 13 for facilitating the manipulation thereof.

By pivoting the whole of the motor assembly 10, the chain driving sprocket 7 can either be moved towards the guide bar 4, as illustrated in part A of figure 3. In this position of the chain driving sprocket 7 closest to the guide bar 4, the chain 5 can be mounted most easily. Alternatively, as illustrated in part B of figure 3 the motor assembly 10 can be rotated counter clockwise around the pivot 12, whereby the chain driving sprocket 7 moves away from the guide bar 4 and the chain 5 would be increasingly tensioned. In the design of the chainsaw 1 according to the present disclosure, the guide bar 4 can be attached to the housing 2 relatively simply and rigidly, for example by a number of bolts 14.

It is noted that, because the handle 13 is located beyond the chain driving sprocket 7 as seen from the pivot 12, a force that is exerted on the handle 13 results in a higher force on the chain 5, which design feature favourably facilitates the tensioning thereof. Furthermore, the pivot 12 is arranged on a virtual line L1 intersecting the axis of rotation of the chain driving sprocket 7 and oriented predominantly perpendicular to the long direction L2 of the guide bar 4, as far away from the chain driving sprocket 7 as possible. By this latter design feature, a displacement or repositioning of the motor assembly 10 relative to the guide bar 4 occurs mainly along the length thereof, such that the alignment of the chain 5 relative to the guide bar 4 is favourably influenced as little as possible by such displacement or repositioning. Finally, in the tensioned state of the chain 5 illustrated in figure 3B, the pivot 12 is arranged on right side of a centre of gravity of the motor assembly 10 such that a counter clockwise oriented torque is exerted thereon by gravity, which torque thus favourably contributes to the chain tension.

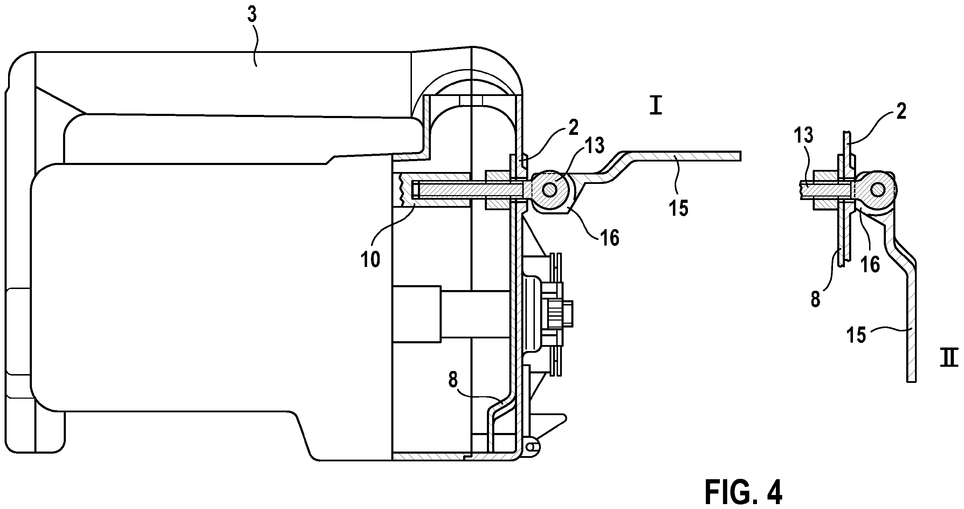

A spring (not shown) can be attached between the housing 2 and the motor assembly 10 that exerts a force on the motor assembly 10 directed away from the guide bar 4 in order to maintain a certain amount of chain tension. However, for this purpose, it is better to more rigidly fix, i.e. to lock the position of the motor assembly 10 relative to the housing 2 by means of a lock-and-release mechanism, whereof an example is illustrated in figure 4.

Figure 4 provides a cross-section of the chainsaw 1 intersecting the handle 13 and facing in the long direction of the guide bar 4. A manually operable lever 15 is rotatably mounted on the handle 13, with a side part of the housing 2 being located in between such lever 15 and the base plate 8 of the motor assembly 10. An end part 16 of the lever 15 is cam-shaped, is provided with a smoothly curved, however non-circular shape, such that the lever can be rotated relative to the housing 2 between two ultimate positions thereof. In a first position I, a section of the end part 16 of the lever 15 having a relatively small radius is located opposite the base plate 8 and out of contact with the housing 2 and in a second position II, a section of the end part 16 having a relatively large radius is located opposite the base plate 8 and in contact with the housing 2. In this second position II of the lever 15, the said side part of the housing 2 is clamped between the lever 15 and the base plate 8, thus fixing, i.e. locking the position of the motor assembly 10 relative to the housing 2.

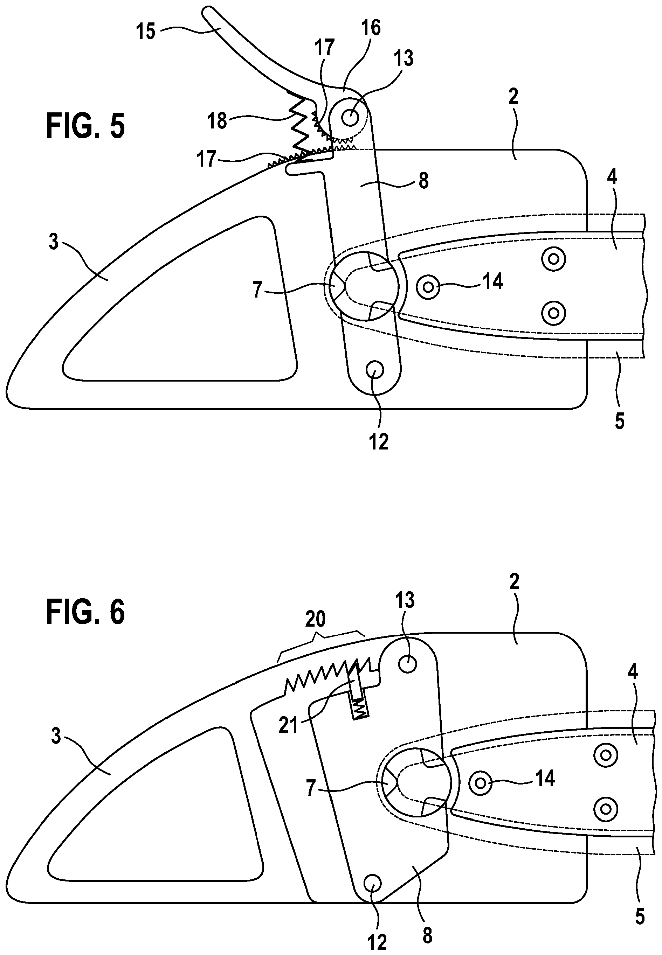

As illustrated in figures 5 and 6, it is entirely possible to apply alternative designs of the lock-and-release mechanism. For example, in the embodiment of the chainsaw 1 of figure 5, the lever 15 with the cam-shaped end part 16 engages a top part of the housing 2. Additionally in this embodiment, the contacting (surface) parts of the housing 2 and the lever 15 are both provided with a surface profile 17 of mutually interlocking teeth to securely fix the position of the motor assembly 10 relative to the housing 2. A compression spring 18 is provided between the lever 15 and the housing 2 to facilitate the unlocking of the said surface profiles 17, i.e. to facilitate the release of the lock-and-release mechanism concerned. Alternatively, in the embodiment of the chainsaw 1 of figure 6, a ratchet 20, 21 that is, as such, well-known is applied for fixing the position of the motor assembly 10 relative to the housing 2. The ratchet 20, 21 comprises a toothed rack 20 that is part of, or at least fixed to the housing 2 and a spring-loaded pawl 21 that is rigidly associated with the base plate 8 in the direction of the toothed rack 20.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features.

## Claims

1. A chainsaw (1) provided with a chain (5), a support frame (2), a guide bar (4) and with a motor assembly (10) comprising a motor (6) and a chain driving sprocket (7) for driving the chain (5) around the guide bar (4) during operation, the guide bar (4) and the motor assembly (10) being attached to the support frame (2), wherein the motor assembly (10) is displaceably attached to the support frame (2) appropriate for tensioning the chain (5), **characterised in that** the motor assembly (10) is pivotally mounted on the support frame (2).

2. The chainsaw (1) according to claim 1, **characterised in that** the guide bar (4) has an oblong shape and **in that** the motor assembly (10) is displaceable in a long direction (L2) of the guide bar (4).

3. The chainsaw (1) according to claim 1 or 2, **characterised in that** a pivot point (12) between the motor assembly (10) and the support frame (2) is arranged such that a virtual line (L1) intersecting such pivot point (12) and an axis of rotation of the chain driving sprocket (7) is oriented essentially perpendicular to a long direction (L2) of the guide bar (4).

4. The chainsaw (1) according to a preceding claim, **characterised in that** the motor assembly (10) is provided with a handle (13), which handle (13) allows the manipulation of the motor assembly (10) at some distance from a pivot point (12) between the motor assembly (10) and the support frame (2), which distance exceeds a distance between such pivot point (12) and an axis of rotation of the chain driving sprocket (7).

5. The chainsaw (1) according to a preceding claim, **characterised in that** the support frame (2) represents, or at least is part of or is fixed to a housing (2) of the chainsaw (1), which housing (2) is provided with one or more handgrips (3) for the manipulation of the chainsaw (1), and **in that** a pivot point (12) between the motor assembly (10) and the housing (2) is arranged on a side of the housing (2) that lies opposite a side thereof provided with at least one of the handgrips (3).

6. The chainsaw (1) according to a preceding claim, **characterised in that** a spring is provided between the motor assembly (10) and the support frame (2).

7. The chainsaw (1) according to a preceding claim, **characterised in that** it is further provided with a lock-and-release mechanism for either locking a position of the motor assembly (10) relative to the support frame (2) or releasing such relative position to allow the motor assembly (10) to be displaced relative to the support frame (2).

8. The chainsaw (1) according to claim 7, **characterised in that** the lock-and-release mechanism is attached to the motor assembly (10) at some distance from a pivot point (12) between the motor assembly (10) and the support frame (2), which distance exceeds a distance between such pivot point (12) and an axis of rotation of the chain driving sprocket (7).

9. The chainsaw (1) according to claims 7 or 8, **characterised in that** the lock-and-release mechanism is attached to the motor assembly (10) and comprises a wing nut, an over-centre cam (16) or other type of manually operable clamping means (16) and a base plate (8), with a part of the support frame (2), or another part of the chainsaw (1) that is fixed thereto, being located in-between the clamping means (16) and the base plate (8).

10. The chainsaw (1) according to at least one of the claims 7 or 8, **characterised in that** the lock-and-release mechanism includes a ratchet (20, 21) comprising a toothed rack (20) and a spring-loaded pawl (21), which rack (20) is fixed to either one of the motor assembly (10) and the base plate (8) and which pawl (21) is associated with the respective other one of the motor assembly (10) and the base plate (8).

11. The chainsaw (1) according to a preceding claim, **characterised in that** the motor assembly (10) is further provided with an intermediate gear (9) or gear train (9, 11) for transferring a rotary motion of a drive shaft of the motor (6) to the chain driving sprocket (7).

12. Method for adjusting the tension of a chain (5) of a chainsaw (1), which chainsaw (1) is provided with a support frame (2), a guide bar (4) and with a motor assembly (10) comprising a motor (6) and a chain driving sprocket (7) for driving the chain (5) around the guide bar (4), with the guide bar (4) and the motor assembly (10) being attached to the support frame (2), wherein the tension of the chain (5) is adjusted by displacing the motor assembly (10) relative to the support frame (2) and/or the guide bar (4), **characterised in that** the motor assembly (10) being pivotally attached to the support frame (2), wherein the motor assembly (10) is rotated about a pivot point (12) between the motor assembly (10) and the support frame (2) for tensioning the chain (5).

13. The method for adjusting the tension of the chain (5) of the chainsaw (1) in accordance with claim 12, which chainsaw (1) is further provided with a lock-and-release mechanism for either locking a position of the motor assembly (10) relative to the support frame (2) or releasing such relative position to allow the motor assembly (10) to be displaced relative to the support frame (2), wherein, after the tension of the chain (5) is adjusted, the lock-and-release mechanism is operated to lock the position of the motor assembly (10) relative to the support frame (2).

## Patentansprüche

1. Kettensäge (1), die mit einer Kette (5), einem Tragrahmen (2), einer Führungsschiene (4) und mit einer Motoranordnung (10), die einen Motor (6) und ein Kettenantriebsrad (7) zum Antreiben der Kette (5) um die Führungsschiene (4) während des Betriebs umfasst, versehen ist, wobei die Führungsschiene (4) und die Motoranordnung (10) am Tragrahmen (2) befestigt sind, wobei die Motoranordnung (10) verschiebbar am Tragrahmen (2) befestigt ist, um die Kette (5) spannen zu können, **dadurch gekennzeichnet, dass** die Motoranordnung (10) auf dem Tragrahmen (2) verschwenkbar montiert ist.

2. Kettensäge (1) nach Anspruch 1, **dadurch gekennzeichnet, dass** die Führungsschiene (4) eine längliche Form aufweist, und dadurch, dass die Motoranordnung (10) in Längsrichtung (L2) der Führungsschiene (4) verschiebbar ist.

3. Kettensäge (1) nach Anspruch 1 oder 2, **dadurch gekennzeichnet, dass** ein Drehpunkt (12) zwischen der Motoranordnung (10) und dem Tragrahmen (2) derart angeordnet ist, dass eine virtuelle Linie (L1), die den Drehpunkt (12) und eine Drehachse des Kettenantriebsrads (7) schneidet, im Wesentlichen senkrecht zur Längsrichtung (L2) der Führungsschiene (4) ausgerichtet ist.

4. Kettensäge (1) nach einem der vorstehenden Ansprüche, **dadurch gekennzeichnet, dass** die Motoranordnung (10) mit einem Griff (13) versehen ist, wobei der Griff (13) zulässt, dass die Motoranordnung (10) in einem Abstand von einem Drehpunkt (12) zwischen der Motoranordnung (10) und dem Tragrahmen (2) betätigt wird, wobei der Abstand den Abstand zwischen einem derartigen Drehpunkt (12) und einer Drehachse des Kettenantriebsrads (7) übersteigt.

5. Kettensäge (1) nach einem der vorstehenden Ansprüche, **dadurch gekennzeichnet, dass** der Tragrahmen (2) das Gehäuse (2) der Kettensäge (1) darstellt oder zumindest ein Teil davon ist oder daran befestigt ist, wobei das Gehäuse (2) mit einem oder mehreren Handgriffen (3) für die Bedienung der Kettensäge (1) versehen ist, und dadurch, dass ein Drehpunkt (12) zwischen der Motoranordnung (10) und dem Gehäuse (2) auf einer Seite des Gehäuses (2) angeordnet ist, die der Seite entgegengesetzt ist, die mit mindestens einem der Handgriffe (3) versehen ist.

6. Kettensäge (1) nach einem der vorstehenden Ansprüche, **dadurch gekennzeichnet, dass** eine Feder zwischen der Motoranordnung (10) und dem Tragrahmen (2) vorgesehen ist.

7. Kettensäge (1) nach einem der vorstehenden Ansprüche, **dadurch gekennzeichnet, dass** sie ferner mit einem Sperr-und-Lösemechanismus zum Sperren einer Position der Motoranordnung (10) in Bezug zum Tragrahmen (2) oder zum Lösen einer derartigen relativen Position versehen ist, um zuzulassen, dass die Motoranordnung (10) in Bezug zum Tragrahmen (2) verschoben wird.

8. Kettensäge (1) nach Anspruch 7, **dadurch gekennzeichnet, dass** der Sperr-und-Lösemechanismus an der Motoranordnung (10) in einem Abstand von einem Drehpunkt (12) zwischen der Motoranordnung (10) und dem Tragrahmen (2) befestigt ist, wobei der Abstand den Abstand zwischen einem derartigen Drehpunkt (12) und einer Drehachse des Kettenantriebsrads (7) übersteigt.

9. Kettensäge (1) nach einem der Ansprüche 7 oder 8, **dadurch gekennzeichnet, dass** der Sperr-und-Lösemechanismus an der Motoranordnung (10) befestigt ist und eine Flügelmutter, eine Totpunktnocke (16) oder eine andere Art manuell betätigte Einspannvorrichtung (16) und eine Grundplatte (8) umfasst, wobei sich ein Teil des Tragrahmens (2) oder ein anderer daran befestigter Teil der Kettensäge (1) zwischen der Einspannvorrichtung (16) und der Grundplatte (8) befindet.

10. Kettensäge (1) nach mindestens einem der Ansprüche 7 oder 8, **dadurch gekennzeichnet, dass** der Sperr-und-Lösemechanismus eine Sperrklinke (20, 21) umfasst, die eine Zahnstange (20) und eine federvorgespannte Klinke (21) umfasst, wobei die Zahnstange (20) entweder an der Motoranordnung (10) oder der Grundplatte (8) fixiert ist und wobei die Klinke (21) dem jeweils anderen Element der Motoranordnung (10) und der Grundplatte (8) zugeordnet ist.

11. Kettensäge (1) nach einem der vorstehenden Ansprüche, **dadurch gekennzeichnet, dass** die Motoranordnung (10) ferner mit einem Zwischenzahnrad (9) oder -getriebezug (9, 11) versehen ist, um eine Drehbewegung einer Antriebswelle des Motors (6) auf das Kettenantriebsrad (7) zu übertragen.

12. Verfahren zum Anpassen der Spannung einer Kette (5) einer Kettensäge (1), wobei die Kettensäge (1) mit einem Tragrahmen (2), einer Führungsschiene (4) und mit einer Motoranordnung (10), die einen Motor (6) und ein Kettenantriebsrad (7) zum Antreiben der Kette (5) um die Führungsschiene (4) umfasst, versehen ist, wobei die Führungsschiene (4) und die Motoranordnung (10) am Tragrahmen (2) befestigt sind, wobei die Spannung der Kette (5) durch das Verschieben der Motoranordnung (10) in Bezug zum Tragrahmen (2) und/oder zur Führungsschiene (4) angepasst wird, **dadurch gekennzeichnet, dass** die Motoranordnung (10) am Tragrahmen (2) verschwenkbar befestigt ist, wobei die Motoranordnung (10) um einen Drehpunkt (12) zwischen der Motoranordnung (10) und dem Tragrahmen (2) gedreht wird, um die Kette (5) zu spannen.

13. Verfahren zum Anpassen der Spannung der Kette (5) der Kettensäge (1) nach Anspruch 12, wobei die Kettensäge (1) ferner mit einem Sperr-und-Lösemechanismus zum Sperren einer Position der Motoranordnung (10) in Bezug zum Tragrahmen (2) oder zum Lösen einer derartigen relativen Position versehen ist, um zuzulassen, dass die Motoranordnung (10) in Bezug zum Tragrahmen (2) verschoben wird, wobei, nachdem die Spannung der Kette (5) angepasst wurde, der Sperr-und-Lösemechanismus betätigt wird, um die Position der Motoranordnung (10) in Bezug zum Tragrahmen (2) zu sperren.

## Revendications

1. Scie à chaîne (1) pourvue d'une chaîne (5), d'une structure de support (2), d'une barre de guidage (4) et d'un ensemble moteur (10) comprenant un moteur (6) et une roue dentée d'entraînement de chaîne (7) servant à entraîner la chaîne (5) autour de la barre de guidage (4) pendant le fonctionnement, la barre de guidage (4) et l'ensemble moteur (10) étant attachés à la structure de support (2), l'ensemble moteur (10) étant attaché de manière déplaçable à la structure de support (2) de manière appropriée pour tendre la chaîne (5), **caractérisée en ce que** l'ensemble moteur (10) est installé à pivotement sur la structure de support (2).

2. Scie à chaîne (1) selon la revendication 1, **caractérisée en ce que** la barre de guidage (4) présente une forme oblongue et **en ce que** l'ensemble moteur (10) est déplaçable dans une direction de longueur (L2) de la barre de guidage (4).

3. Scie à chaîne (1) selon la revendication 1 ou 2, **caractérisée en ce qu'**un point de pivotement (12) entre l'ensemble moteur (10) et la structure de support (2) est placé de telle sorte qu'une ligne imaginaire (L1) intersectant un tel point de pivotement (12) et un axe de rotation de la roue dentée d'entraînement de chaîne (7) est orientée de façon essentiellement perpendiculaire à une direction de longueur (L2) de la barre de guidage (4) .

4. Scie à chaîne (1) selon une revendication précédente, **caractérisée en ce que** l'ensemble moteur (10) est pourvu d'une poignée (13), ladite poignée (13) permettant la manipulation de l'ensemble moteur (10) à une certaine distance d'un point de pivotement (12) entre l'ensemble moteur (10) et la structure de support (2), ladite distance étant supérieure à une distance entre un tel point de pivotement (12) et un axe de rotation de la roue dentée d'entraînement de chaîne (7).

5. Scie à chaîne (1) selon une revendication précédente, **caractérisée en ce que** la structure de support (2) constitue un boîtier (2) de la scie à chaîne (1), ou au moins fait partie de celui-ci ou est fixée à celui-ci, ledit boîtier (2) étant pourvu d'une ou de plusieurs partie (s) de préhension (3) pour la manipulation de la scie à chaîne (1), et **en ce qu'**un point de pivotement (12) entre l'ensemble moteur (10) et le boîtier (2) est placé sur un côté du boîtier (2) qui se situe à l'opposé d'un côté de celui-ci pourvu d'au moins une des parties de préhension (3).

6. Scie à chaîne (1) selon une revendication précédente, **caractérisée en ce qu'**un ressort est placé entre l'ensemble moteur (10) et la structure de support (2).

7. Scie à chaîne (1) selon une revendication précédente, **caractérisée en ce qu'**elle est en outre pourvue d'un mécanisme de verrouillage/déverrouillage servant soit à verrouiller une position de l'ensemble moteur (10) par rapport à la structure de support (2), soit à déverrouiller une telle position relative afin de permettre le déplacement de l'ensemble moteur (10) par rapport à la structure de support (2).

8. Scie à chaîne (1) selon la revendication 7, **caractérisée en ce que** le mécanisme de verrouillage/déverrouillage est attaché à l'ensemble moteur (10) à une certaine distance d'un point de pivotement (12) entre l'ensemble moteur (10) et la structure de support (2), ladite distance étant supérieure à une distance entre un tel point de pivotement (12) et un axe de rotation de la roue dentée d'entraînement de chaîne (7).

9. Scie à chaîne (1) selon la revendication 7 ou 8, **caractérisée en ce que** le mécanisme de verrouillage/déverrouillage est attaché à l'ensemble moteur (10) et comprend un écrou à oreilles, une came décentrée (16) ou un autre type de moyen de serrage actionnable manuellement (16) et une plaque de base (8), une partie de la structure de support (2), ou une autre partie de la scie à chaîne (1) qui est fixée à celle-ci, étant située entre le moyen de serrage (16) et la plaque de base (8).

10. Scie à chaîne (1) selon au moins une des revendications 7 et 8, **caractérisée en ce que** le mécanisme de verrouillage/déverrouillage comprend un mécanisme d'encliquetage (20, 21) comprenant une crémaillère (20) et un cliquet à ressort (21), ladite crémaillère (20) étant fixée à l'un de l'ensemble moteur (10) et la plaque de base (8) et ledit cliquet (21) étant associé respectivement à l'autre de l'ensemble moteur (10) et la plaque de base (8).

11. Scie à chaîne (1) selon une revendication précédente, **caractérisée en ce que** l'ensemble moteur (10) est en outre pourvu d'une roue d'engrenage (9) ou d'un train de roues d'engrenage (9, 11) intermédiaire servant à transférer un mouvement de rotation d'un arbre d'entraînement du moteur (6) à la roue dentée d'entraînement de chaîne (7).

12. Procédé de réglage de la tension d'une chaîne (5) d'une scie à chaîne (1), ladite scie à chaîne (1) étant pourvue d'une structure de support (2), d'une barre de guidage (4) et d'un ensemble moteur (10) comprenant un moteur (6) et une roue dentée d'entraînement de chaîne (7) servant à entraîner la chaîne (5) autour de la barre de guidage (4), la barre de guidage (4) et l'ensemble moteur (10) étant attachés à la structure de support (2), la tension de la chaîne (5) étant réglée en déplaçant l'ensemble moteur (10) par rapport à la structure de support (2) et/ou à la barre de guidage (4), **caractérisé en ce que** l'ensemble moteur (10) est attaché à pivotement à la structure de support (2), l'ensemble moteur (10) étant mis en rotation autour d'un point de pivotement (12) entre l'ensemble moteur (10) et la structure de support (2) pour tendre la chaîne (5).

13. Procédé de réglage de la tension de la chaîne (5) de la scie à chaîne (1) selon la revendication 12, ladite scie à chaîne (1) étant en outre pourvue d'un mécanisme de verrouillage/déverrouillage servant soit à verrouiller une position de l'ensemble moteur (10) par rapport à la structure de support (2), soit à déverrouiller une telle position relative afin de permettre le déplacement de l'ensemble moteur (10) par rapport à la structure de support (2), le mécanisme de verrouillage/déverrouillage étant actionné, après le réglage de la tension de la chaîne (5), pour verrouiller la position de l'ensemble moteur (10) par rapport à la structure de support (2).
